# EUROPÄISCHE PATENTSCHRIFT

(11) **EP 2 654 526 B1**
(45) Veröffentlichungstag und Bekanntmachung des Hinweises auf die Patenterteilung: **22.08.2018**
(21) Anmeldenummer: 11799423.6
(22) Anmeldetag: 16.12.2011
(51) Int. Cl.: A47J 31/36

(54) **KAFFEEVOLLAUTOMAT MIT GEKAPSELTEM ANTRIEB**
FULLY AUTOMATIC COFFEE MACHINE HAVING AN ENCAPSULATED DRIVE
MACHINE À CAFÉ ENTIÈREMENT AUTOMATIQUE À ENTRAÎNEMENT ENCAPSULÉ

(30) Priorität: 22.12.2010 DE 102010063943
(43) Veröffentlichungstag der Anmeldung: 30.10.2013
(73) Patentinhaber: BSH Hausgeräte GmbH, 81739 München (DE)
(72) Erfinder: MATHES, Anton, 83364 Neukirchen am Teisenberg (DE); STROBL, Robert, 83246 Unterwössen (DE); TRACY, Timothy Mark, 83352 Altenmarkt (DE)
(86) Internationale Anmeldenummer: PCT/EP2011/073019
(87) Internationale Veröffentlichungsnummer: WO 2012/084705

(56) Entgegenhaltungen:
- EP-A1- 0 528 759
- EP-A1- 2 042 062
- EP-A1- 2 196 115
- DE-U1-202004 018 776

## Beschreibung

Die Erfindung betrifft einen Kaffeevollautomaten, insbesondere für Haushaltszwecke, mit einer Brüheinheit, die eine Spindel zum Verfahren einer Brühkammer innerhalb der Brüheinheit und eine Antriebseinheit umfasst, die die Spindel im Betrieb in Rotation versetzt. Die Antriebseinheit umfasst zumindest einen Elektromotor und ggf. zusätzlich ein Getriebe, das die Welle des Elektromotors und die Spindel verbindet.

Kaffeevollautomaten mit einer Spindel zum Verfahren der Brühkammer sind am Markt bekannt. Automaten für den Hausgebrauch enthalten regelmäßig eine Spindel, die aus Stahl gewalzt ist und ihren Abmessungen und dem Prinzip nach einer Gewindestange ähnelt. Ihre Herstellung ist teuer, weil sie und eine zugehörige Spindelmutter regelmäßig Sonderanfertigungen, zumindest hinsichtlich ihrer Abmessungen, sind. Wie bei Gewindestangen auch, verfügen diese Spindeln über geringe Gewindesteigungen, die eine hohe Umdrehungszahl erfordern, um einen bestimmten Hub der Brühkammer zu bewirken. Daraus resultieren störende Betriebsgeräusche. Für Kaffeevollautomaten im gastronomischen Bereich, bei denen weniger auf geringe Gehäuseabmessungen geachtet werden muss, sind Spindeln aus Kunststoff bekannt. Bei gleicher Leistungsfähigkeit müssen diese Spindeln jedoch wegen des an sich weniger belastbaren Kunststoffmaterials einen deutlich höheren Durchmesser aufweisen. Er kann bei Vollautomaten für den Gastronomiebereich hingenommen werden, weil die Spindel aufgrund der ohnehin größeren Abmessungen der Geräte leichter Platz findet. Aus Herstellungs- und Materialersparnisgründen sind Kunststoffspindeln dieser Art oftmals hohl ausgebildet.

Die EP 0528 759 A1 offenbart eine Antriebsvorrichtung umfassend eine Antriebsspindel mit einem Spindelgewinde sowie mindestens ein Mitnahmeorgan. Das letztere ist mit einem Brühzylinder einer Brüheinrichtung verbunden. Das Mitnahmeorgan weist auf der dem Spindelgewinde zugewandten Seite Teilgewindegänge auf, die mit dem Spindelgewinde im Eingriff stehen. Die EP 2 196 115 A1, die DE 20 2004 018 776 U1 wie auch die EP 2 042 062 A1 offenbaren jeweils Antriebe für Kaffeebrühvorrichtungen umfassend eine Spindel.

Aufgabe der Erfindung ist es, eine Spindelbrüheinheit anzugeben, die möglichst Platz sparend und kostengünstig ist.

Diese Aufgabe wird bei dem eingangs genannten Kaffeevollautomaten erfindungsgemäß dadurch gelöst, dass die Spindel einen Hohlraum aufweist, die Antriebseinheit einen Motor und gegebenenfalls ein Getriebe aufweist, und der Motor beziehungsweise der Motor und das Getriebe vollständig innerhalb des Hohlraums der Spindel angeordnet ist beziehungsweise sind. Der Hohlraum ist vorteilhafterweise über eine Öffnung von einer Stirnseite der stangenförmigen Spindel aus zugänglich. An ihren Stirnseiten ist die Spindel regelmäßig auch an einem Gehäuse des Kaffeevollautomaten gelagert. Die Erfindung verlässt also das bisherige Konstruktionsprinzip für Kaffeevollautomaten für den Hausgebrauch, das eine massive Stahlspindel vorsah. Sie verfolgt vielmehr das Prinzip, eine zumindest teilweise hohle Spindel einzusetzen. Die Erfindung nimmt dabei in Kauf, dass die Spindel aus Stabilitätsgründen einen größeren Platzbedarf erfordert, was dem Konstruktionsprinzip von Kaffeevollautomaten für den Hausgebrauch an sich zuwiderläuft. Sie gleicht diesen erhöhten Platzbedarf durch eine Spindel mit größerem Volumen dadurch aus, dass Teile der Antriebseinrichtung den Hohlraum innerhalb der Spindel nutzen. Damit macht die erfinderische Konstruktion aber nicht nur den erhöhten Platzbedarf wieder wett, sondern erzielt zusätzlich den Vorteil, dass diejenigen Teile der Antriebseinrichtung, die innerhalb der Spindel angeordnet sind, weitgehend gekapselt sind. Damit sind diese Teile der Antriebseinrichtung ohne einen konstruktiven Zusatzaufwand nicht nur gegen Immissionen geschützt, beispielsweise Verschmutzungen durch Wasser, Dampf oder Kaffeepulver. Zusätzlich lassen sich mit ebenso geringem Aufwand Emissionen reduzieren, wie beispielsweise die Geräuschentwicklung, die bewegte mechanische Teile regelmäßig abstrahlen.

Die Antriebseinheit für die Spindel besteht, wie oben bereits erwähnt, zumindest aus einem regelmäßig strombetriebenen Motor und ggf. aus einem zwischen dem Motor und der Spindel angeordneten Getriebe. Erfindungsgemäß ist der Motor beziehungsweise der Motor und das Getriebe vollständig innerhalb des Hohlraums der Spindel angeordnet sein. Sie stellen nämlich einen Bestandteil der Antriebseinheit dar, der aufgrund vieler bewegter Teile, die zudem meist offen liegen, besonders schmutzempfindlich und dadurch anfällig für Abnutzung ist. Durch die Verlagerung in den Hohlraum innerhalb der Spindel lässt sich das Getriebe und/oder der Motor nicht nur gegen Verschmutzungen weitgehend abschirmen, sondern auch seine Geräuschabstrahlung nach außen hin beträchtlich reduzieren.

Ein Getriebe ist regelmäßig dafür erforderlich, eine gegebene Drehzahl des Motors an eine erforderliche Drehzahl der Spindel anzupassen. Ein weiteres Kriterium für die Anordnung eines Getriebes kann eine geeignete Anbindung des motorseitigen Abtriebs an die Spindel darstellen. Nach einer weiteren vorteilhaften Ausgestaltung der Erfindung kann die Spindel daher über eine umlaufende Innenverzahnung auf ihrer Innenfläche verfügen, an der ein innen liegendes Getriebe angreifen und eine mechanische Verbindung zum Motor herstellen kann. Die Innenverzahnung der Spindel kann entweder nachträglich in den Hohlraum der Spindel eingesetzt, dort angespritzt oder auch bereits bei der Fertigung mit ausgebildet werden. Auch die mechanische Anbindung der Spindel an die Antriebseinheit erfolgt damit von ihrer Innenseite aus.

Die umlaufende Innenverzahnung der Spindel kann die gesamte Innenfläche ihres Hohlraums bedecken oder auch nur teilflächig ausgebildet sein. Nach einer weiteren vorteilhaften Ausgestaltungsform kann sie ringförmig ausgebildet sein und damit ein Hohlrad darstellen. Das Hohlrad kann Bestandteil eines Planetengetriebes mit mehreren Planetenrädern, einem Planetenträger und einem Sonnenrad sein. Mit dem Antrieb des Sonnenrades oder des Planetenträgers bieten sich zwei Möglichkeiten für die Anbindung des Getriebes an die Abtriebsseite des Motors der Antriebseinheit. Mit dem Einsatz eines Planetengetriebes bietet sich zudem die Möglichkeit einer konzentrischen Anordnung der Spindelachse einerseits und der Antriebswelle des Motors andererseits, wodurch Zusatzmomente infolge eines Achsenversatzes vermieden werden können. Damit lässt sich ein besonders kompakter und Platz sparender Getriebeaufbau realisieren.

Erfindungsgemäß kann das Getriebe und/oder der Motor zumindest teilweise innerhalb der Spindel angeordnet sein. Dabei lassen sich die Vorteile einer Kapselung gegen Immissionen zum Schutz der mechanischen Teile des Getriebes und/oder des Motors und gegen Emissionen zur Reduzierung der Geräuschabstrahlung des Motors nutzen.

Nach einer weiteren vorteilhaften Ausgestaltung der Erfindung kann der Kaffeevollautomat über einen Außenläufermotor als Bestandteil der Antriebseinheit verfügen, der ebenfalls zumindest teilweise innerhalb der Spindel angeordnet ist. Da der Läufer des Motors auf dessen Außenseite angebracht ist, lässt sich eine besonders einfache Anbindung des Außenläufermotors an eine Innenseite bzw. Innenfläche der Spindel herstellen. Der Außenläufer bzw. Rotor als Gehäuse des Motors kann demzufolge fest oder lösbar mit der Innenfläche der Spindel verbunden sein. Der feststehende Stator des Motors und seine elektrischen Verbindungen dagegen sind fest mit einem Gehäuse des Kaffeevollautomaten verbunden, und zwar vorteilhafterweise in der Nähe der Lagerung der Spindel am Gehäuse. In dieser Ausführungsform ist nicht nur der Motor besonders Platz sparend und kompakt innerhalb der Spindel angebracht, so dass er keinen zusätzlichen Bauraum außerhalb der Spindel beansprucht. Es entfällt außerdem auch ein Getriebe, das anderenfalls Bauraum benötigt, für
Verschleiß anfällig ist und eine zusätzliche Geräuschquelle darstellen könnte. Diese Ausführungsform stellt damit eine besonders kompakte Bauweise dar.

Nach einer weiteren vorteilhaften Ausgestaltung der Erfindung kann die Spindel selbst mit ihrer Innenfläche des Hohlraums den Rotor des Motors darstellen. Damit lässt sich eine Funktionenkombination erreichen, die weiteren Platz einspart: Auf ihrer umfangseitigen Au-ßenfläche dient die Spindel dem Verfahren der Brühkammer innerhalb der Brüheinheit. Ihre hohlraumseitige Innenfläche dagegen stellt als Außenläufer des Motors die Schnittstelle zu ihrer Antriebseinheit dar. Durch die Variation des Durchmessers der Spindel kann auf die Konstruktion und den Platzbedarf des Motors Rücksicht genommen werden. So kann über den Durchmesser des Außenläufers bzw. der Spindel und ggf. eine entsprechende axiale Erstreckungslänge innerhalb der Spindel für Abmessungen eines Motors gesorgt werden, der ein ausreichendes Drehmoment erzeugt. Auf ein Getriebe kann dann zuverlässig verzichtet werden.

Nach einer weiteren vorteilhaften Ausgestaltung der Erfindung können auf der Innenseite der Spindel Magneten für den Außenläufer des Motors angebracht sein. So können beispielsweise Permanentmagneten bereits bei der Fertigung der Spindel angebracht oder eingesetzt werden, um die Spindel als Außenläufer des Motors nutzen zu können. Dieser wird als permanentmangnetangeregter Motor bezeichnet. Sein Vorteil besteht in einem besonders einfachen Aufbau, der keine Schleifringe o. Ä. erfordert, wenn die Permanentmagneten dem Rotor zugeordnet sind.

Nach einer weiteren vorteilhaften Ausgestaltung der Erfindung können die Lagerung der Spindel einerseits und die Lagerung der Antriebseinheit andererseits konzentrisch angeordnet sein. Dadurch lassen sich Zusatzmomente vermeiden, wie sie bei einer exzentrischen Anordnung entstehen können. Dadurch gelingt eine besonders kompakte Bauweise, die nicht nur die Kapselung der Antriebseinheit, sondern zusätzlich auch ihrer Lagerung ermöglicht. Damit gewinnt die gesamte Konstruktion an Robustheit.

Spindeln für Kaffeevollautomaten für den Hausgebrauch werden bekanntermaßen regelmäßig aus Stahl hergestellt. Nach einer vorteilhaften Ausgestaltung der Erfindung kann die Spindel aus Kunststoff bestehen. Damit lässt sie sich wesentlich flexibler an die Anforderungen innerhalb des Kaffeevollautomaten anpassen, beispielsweise hinsichtlich ihres Durchmessers, ihrer Ausbildung als Außenläufer eines Motors, aber auch hinsichtlich ihrer Gewindesteigung. Die Möglichkeit, einen Hohlraum innerhalb der Spindel in einem vertretbaren Kostenrahmen zu erzeugen, kompensiert ihren größeren Platzbedarf, der in Verarbeitungserfordernissen wie Entformungsschrägen, Kerbradien oder Wandstärken und in einem größeren Durchmesser der Spindel begründet liegt.

Die Spindel kann wie eine Stahlspindel über ein bekanntes metrisches Gewinde verfügen. Nach einer weiteren vorteilhaften Ausgestaltung der Erfindung kann sie über ein mehrgängiges Gewinde verfügen. Die Mehrgängigkeit des Gewindes geht mit einer höheren Gewindesteigung einher. Das steilere Gewinde bewirkt eine Vergrößerung des Gewindehubs, weil ein bestimmter Hub mit weniger Umdrehungen bzw. in kürzerer Zeit zu erreichen ist. Das mehrgängige Getriebe dient damit nicht allein der Schnelligkeit der Getränkezubereitung des Kaffeevollautomaten, sondern aufgrund der geringeren Anzahl von Umdrehungen auch einer Reduzierung der Geräuschemissionen der Antriebseinrichtung.

Das Prinzip der Erfindung wird nachfolgend anhand einer Zeichnung beispielshalber noch näher erläutert. In der Zeichnung zeigen:
- Figur 1:: eine erste Ausgestaltungsform einer Spindel mit gekapseltem Motor und Getriebe,
- Figur 2:: einen Außenläufermotor innerhalb einer Spindel, und
- Figur 3:: eine Spindel als Rotor eines Motors.

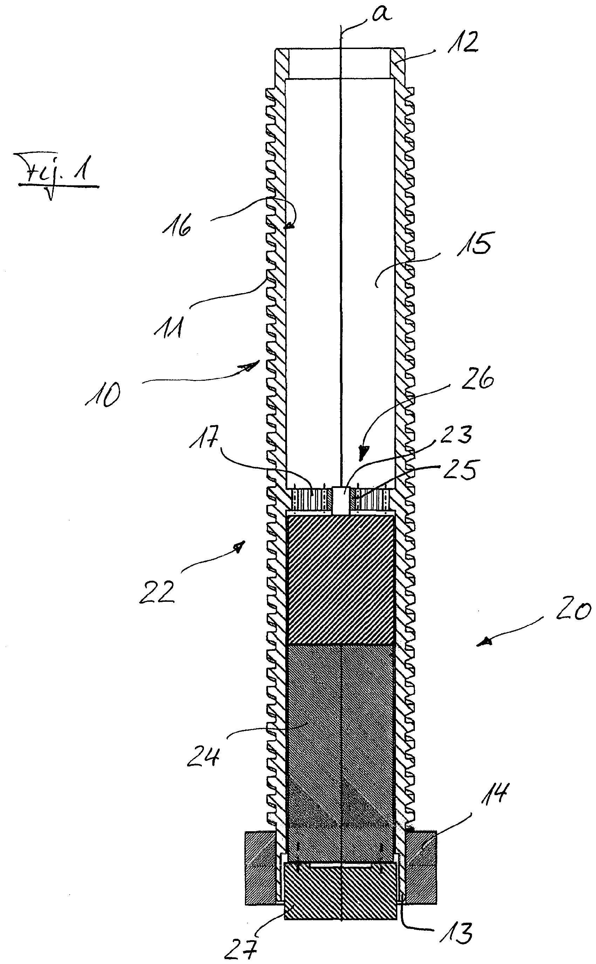

Figur 1 zeigt eine erste Ausführungsform einer Spindel 10 mit einer Außenverzahnung 11 zum Antrieb einer nicht dargestellten Brühkammer in einem Kaffeevollautomaten. Ein jeweils stirnseitiger oberer Lagerzapfen 12 und ein unterer Lagerzapfen 13 dienen einer drehbaren Lagerung der Spindel 10 um ihre Drehachse a innerhalb eines nicht dargestellten Gehäuses des Kaffeevollautomaten. Der untere Lagerzapfen 13 ist in einem Spindellager 14 aufgenommen. Die Spindel 10 ist hohl ausgebildet und bietet daher in ihrem Inneren einen zylindrischen Hohlraum 15. Dessen Innenseite 16 ist etwa in der Mitte der Spindel mit einer ringförmig umlaufenden Innenverzahnung 17 ausgestattet, so dass die Spindel 10 dort ein Hohlrad bildet.

In einem unteren Abschnitt des Hohlraums 15 ist eine Antriebseinheit 20 bestehend aus einem Getriebe 22 und einem Motor 24 vollständig untergebracht. Das Getriebe 22 umfasst eine Abtriebswelle 23, auf der ein Sonnenrad 25 verdrehfest angebracht ist. Das Sonnenrad 25 bildet zusammen mit mehreren nicht dargestellten Planetenrädern und deren Planetenträgern und der Innenverzahnung 17 als Hohlrad ein Planetengetriebe 26.

Das Getriebe 22 ist mit dem Motor 24 antriebsseitig verbunden, der auf einem Gegenlager 27 an dem nicht dargestellten Gehäuse ruht. Von dort aus dem Bereich des Gegenlagers 27 erhält der Motor 24 seine Versorgung mit elektrischer Energie

Im Betrieb versorgt eine Stromquelle den Motor 24, der wiederum das Getriebe 22 antreibt. Die Abtriebswelle 23 des Getriebes 22 überträgt das Drehmoment des Motors 24 über das Planetengetriebe 26 auf die Spindel 10. Sie wird dadurch in Bewegung versetzt und verfährt die Brühkammer innerhalb der Brüheinheit.

Das Getriebe 22, zu dem auch das Planetengetriebe 26 zählt, und der Motor 24 als Antriebseinheit 20 werden von der Spindel 10 vollständig umgeben. Die Antriebseinheit 20 ist damit im Hohlraum 15 der Spindel 10 gut gegen Schmutz und Flüssigkeiten geschützt. Weil die Antriebseinheit 20 von der Spindel 10 selbst verdeckt wird, reduziert sich dadurch insbesondere der Verschleiß des Getriebes 22 und damit der Wartungsaufwand des Kaffeevollautomaten. Durch die Kapselung des Motors 24 und des Getriebes 22 durch die Spindel 10 dringen umgekehrt weniger Betriebsgeräusche der Antriebseinheit 20 nach außen. Der Kaffeevollautomat strahlt damit weniger Geräuschemissionen ab, was ihm einen wertigeren Eindruck verleiht und seinen Betrieb weniger störend für die unmittelbare Umgebung macht.

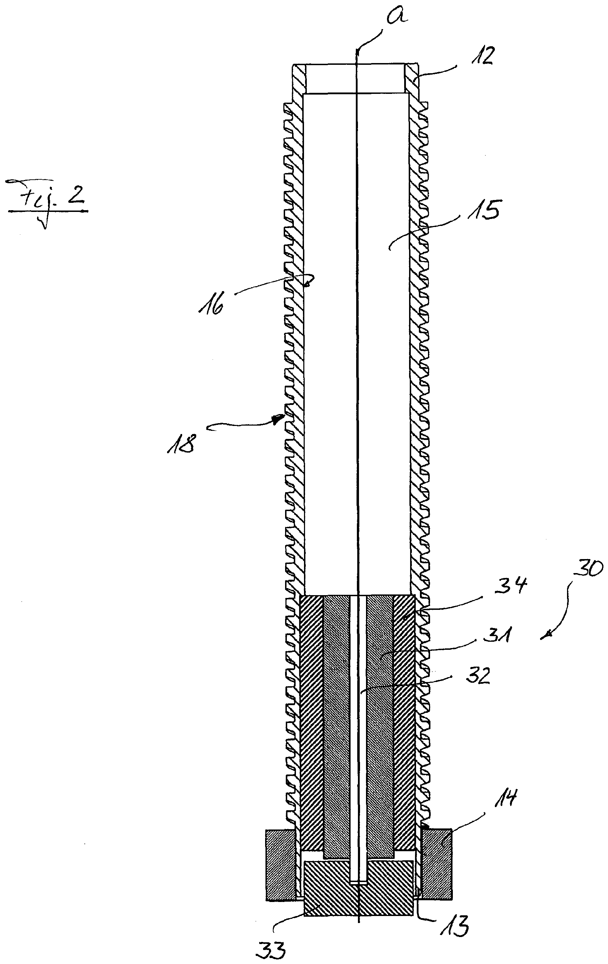

Figur 2 zeigt eine alternative Ausführungsform einer Spindel 18, die ebenfalls über einen oberen Lagerzapfen 12 und einen unteren Lagerzapfen 13 innerhalb eines nicht dargestell-ten Gehäuses des Kaffeevollautomaten drehbar um eine Drehachse a gelagert ist. Auch sie ist mit ihrem unteren Lagerzapfen 13 in einem Spindellager 14 gehalten und weist einen Hohlraum 15 auf, in dem eine Antriebseinheit 20 untergebracht ist. Abweichend von der Ausgestaltungsform gemäß Figur 1 besteht die Antriebseinheit 20 jedoch ausschließlich aus einem Außenläufermotor 30. Er setzt sich aus einem Stator 31 mit einer Statorachse 32 zusammen, die konzentrisch zur Drehachse a der Spindel 18 verläuft. Der Stator 31 und seine Achse 32 sind in einem Gegenlager 33 am Gerätegehäuse gelagert. Der Außenläufer des Motors 30 besteht aus einem Rotor 34, der an der Innenseite 16 der Spindel 18 befestigt ist.

Abweichend vom ersten Ausführungsbeispiel gemäß Figur 1 erfordert die Antriebseinrichtung 20 der Spindel 18 kein Getriebe, ist also getriebelos ausgebildet. Vielmehr greift der Außenläufermotor 30 unmittelbar an der Innenseite 16 der Spindel 18 an, so dass durch Wegfall eines Getriebes dessen Herstellungs- und Montageaufwand entfallen kann und damit Kosten eingespart werden. Die Motorleistung kann dadurch an das Drehmoment, das für den Antrieb der Spindel 18 erforderlich ist, so angepasst werden, dass entweder ein ausreichender Durchmesser für den Rotor 34 und damit für die Spindel 18 gewählt wird oder der Motor 31 insgesamt eine größere Erstreckung in Richtung der Drehachse a erhält, als in der Figur 2 dargestellt. Denn für den Motor 31 steht so gut wie der gesamte Hohlraum 15 zur Verfügung.

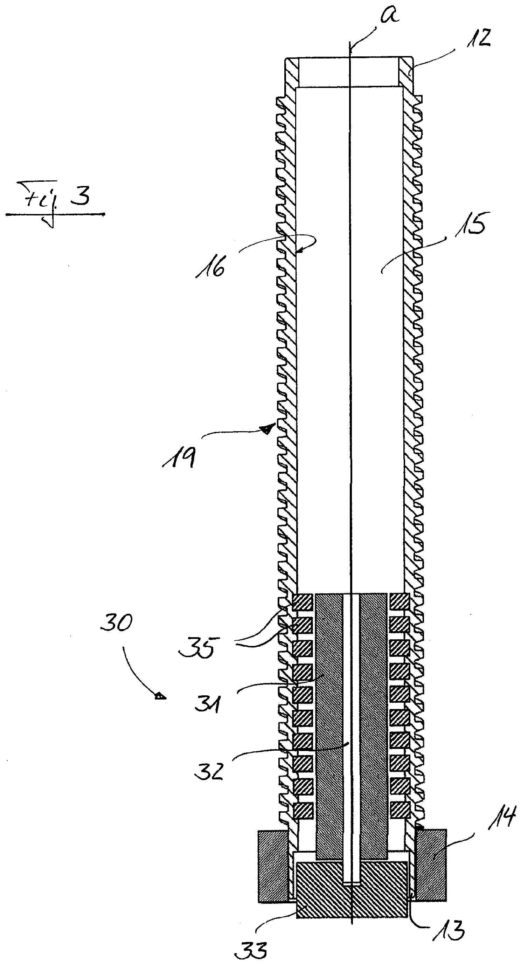

Eine dazu alternative Ausgestaltung zeigt die Figur 3. Die prinzipiell vergleichbar aufgebaute und gelagerte Spindel 19 wird ebenfalls von einem Außenläufermotor 30 angetrieben. Auch er setzt sich aus einem Stator 31 und einer Statorachse 32 zusammen, die koaxial mit der Drehachse a der Spindel 19 verläuft. Abweichend jedoch von der letzten Ausgestaltungsform gemäß Figur 2 besteht der Rotor des Außenläufermotors 30 gemäß Figur 3 aus Permanentmagneten 35, die bereits bei der Herstellung in die Spindel 19 eingesetzt, beispielsweise in den Kunststoff der Kunststoffspindel 19 eingespritzt, wurden. Sie sind damit untrennbar mit der Spindel 19 verbunden. Sie bildet damit neben dem Antrieb der Brühkammer zugleich den Rotor des Außenläufermotors 30.

Der Motor 30 beansprucht in der Figur 3 nur einen geringen Teil des Hohlraums 15 der Spindel 19. Sein Drehmoment, das er zum Antrieb der Spindel 19 aufbringen muss, kann ebenfalls zum einen dadurch den Erfordernissen angepasst werden, dass der Stator 31 und mit ihm die Magnete 35 einen größeren Bereich des Hohlraums 15 in axialer Richtung der Spindel 19 einnehmen. Eine andere Möglichkeit, dem Motor 30 zu einem ausreichenden Drehmoment zu verhelfen, ist eine Vergrößerung des Durchmessers der Spindel 19 und mit ihm des Stators 31. Damit lässt sich das Erfordernis eines Getriebes als Drehmomentwandler und damit ein zusätzlicher Herstellungs- und Montageposten zuverlässig ausschließen.

Der feststehende Stator 31 des Motors 30 ist zusammen mit seinen Verbindungen für seine elektrische Versorgung im Bereich des Gegenlagers 33 am Gerät mechanisch befestigt. Damit liegen sowohl die mechanischen als auch die elektrischen Verbindungen des Motors 30 ebenfalls innerhalb der Spindel 18 bzw. 19, die auch sie kapselt. Soll die Spindel 10, 18 bzw. 19 zu Wartungszwecken entnehmbar sein, muss für eine entsprechende Abdichtung im Bereich des Spindellagers 14 bzw. des Gegenlagers 33 für den Motor 24 bzw. 30 und eine entsprechende robuste elektrische Kontaktierung gesorgt werden. Andererseits ist nur ein geringer Aufwand zur Abdichtung des Motors 24 bzw. 30 und seiner elektrischen Kontaktierung erforderlich, was ebenfalls den Herstellungsaufwand reduziert.

Da es sich bei den vorhergehenden, detailliert beschriebenen Spindeln und Antriebseinheiten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Antriebseinrichtungen in anderer Form als in der hier beschriebenen erfolgen. Ebenso kann die Antriebseinrichtung auch nur teilweise innerhalb der Spindel angeordnet sein, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10: Spindel
- 11: Außenverzahnung
- 12: oberer Lagerzapfen
- 13: unterer Lagerzapfen
- 14: Spindellager
- 15: Hohlraum
- 16: Innenseite
- 17: Innenverzahnung, Hohlrad
- 18: Spindel
- 19: Spindelbrühgruppe
- 20: Antriebseinheit
- 22: Getriebe
- 23: Abtriebswelle
- 25: Sonnenrad
- 26: Planetengetriebe
- 27: Gegenlager
- 30: Motor
- 31: Stator
- 32: Statorachse
- 33: Gegenlager
- 34: Rotor
- 35: Magnete
- a: Drehachse

## Patentansprüche

1. Kaffeevollautomat, insbesondere für Haushaltszwecke, mit einer Brüheinheit, die eine Spindel (10; 18; 19) und eine Antriebseinheit (20) aufweist, die im Betrieb die Spindel (10; 18; 19) in Rotation versetzt, **wobei** die Spindel (10; 18; 19) einen Hohlraum (15) aufweist, wobei die Antriebseinheit (20) einen Motor (24, 30) und gegebenenfalls ein Getriebe (22) aufweist, und wenigstens ein Teil (22; 24; 30) der Antriebseinheit (20) innerhalb des Hohlraums (15) angeordnet ist, **dadurch gekennzeichnet, dass** der Motor (24, 30) beziehungsweise der Motor (24, 30) und das Getriebe (22) vollständig innerhalb des Hohlraums (15) angeordnet ist beziehungsweise sind.

2. Kaffeevollautomat nach Anspruch 1, **gekennzeichnet durch** eine Spindel (10) mit einer Innenverzahnung (17) als Hohlrad.

3. Kaffeevollautomat nach Anspruch 1, **gekennzeichnet durch** einen Außenläufermotor (24, 30).

4. Kaffeevollautomat nach Anspruch3, **dadurch gekennzeichnet, dass** die Spindel (19) als Rotor des Motors (30) ausgebildet ist

5. Kaffeevollautomat nach Anspruch 4, **gekennzeichnet durch** Magneten (35) des Motors (30), die auf einer Innenseite (16) der Spindel (19) angebracht sind.

6. Kaffeevollautomat nach einem der obigen Ansprüche, **gekennzeichnet durch** eine konzentrische Lagerung der Spindel (10; 18; 19) einerseits und der Antriebseinheit (20) andererseits.

7. Kaffeevollautomat nach einem der obigen Ansprüche, **gekennzeichnet durch** eine zumindest teilweise aus Kunststoff gefertigte Spindel (10; 18; 19).

8. Kaffeevollautomat nach einem der obigen Ansprüche, **gekennzeichnet durch** eine Spindel mit einem mehrgängigen Gewinde.

## Claims

1. Fully automatic coffee machine, in particular for domestic use, having a brewing unit, which has a spindle (10; 18; 19) and a drive unit (20), which sets the spindle (10; 18; 19) in rotation during operation, wherein the spindle (10; 18; 19) has a cavity (15), wherein the drive unit (20) has a motor (24, 30) and optionally a gear unit (22), and at least a part (22; 24; 30) of the drive unit (20) is arranged within the cavity (15), **characterised in that** the motor (24, 30) or the motor (24, 30) and the gear unit (22) is or are arranged completely within the cavity (15).

2. Fully automatic coffee machine according to claim 1, **characterised by** a spindle (10) with an inner toothing (17) as a hollow wheel.

3. Fully automatic coffee machine according to claim 1, **characterised by** an external-rotor motor (24, 30).

4. Fully automatic coffee machine according to claim 3, **characterised in that** the spindle (19) is embodied as rotor of the motor (30).

5. Fully automatic coffee machine according to claim 4, **characterised by** magnets (35) of the motor (30), which are attached on an inner side (16) of the spindle (19).

6. Fully automatic coffee machine according to one of the above claims, **characterised by** a concentric bearing of the spindle (10; 18; 19) on one side and the drive unit (20) on the other side.

7. Fully automatic coffee machine according to one of the above claims, **characterised by** a spindle (10; 18; 19) which is manufactured at least partially from plastic.

8. Fully automatic coffee machine according to one of the above claims, **characterised by** a spindle with a multiple-start thread.

## Revendications

1. Machine à café intégralement automatique, en particulier à des fins ménagères, avec une unité d'échaudage, laquelle présente un arbre (10 ; 18 ; 19) et une unité d'entraînement (20), qui déplace l'arbre (10 ; 18 ; 19) en rotation, dans laquelle l'arbre (10 ; 18 ; 19) présente une cavité (15), dans laquelle l'unité d'entraînement (20) présente un moteur (24, 30) et le cas échéant une transmission (22), et au moins une partie (22 ; 24 ; 30) de l'unité d'entraînement (20) est disposée à l'intérieur de la cavité (15), **caractérisée en ce que** le moteur (24, 30) respectivement le moteur (24, 30) et la transmission (22) est respectivement sont intégralement disposé(s) à l'intérieur de la cavité (15).

2. Machine à café intégralement automatique selon la revendication 1, **caractérisée par** un arbre (10) avec une denture interne (17) en guise de couronne.

3. Machine à café intégralement automatique selon la revendication 1, **caractérisée par** un moteur à rotor extérieur (24, 30).

4. Machine à café intégralement automatique selon la revendication 3, **caractérisée en ce que** l'arbre (19) est exécuté sous forme de rotor du moteur (30).

5. Machine à café intégralement automatique selon la revendication 4, **caractérisée par** des aimants (35) du moteur (30) apposés sur un côté intérieur (16) de l'arbre (19).

6. Machine à café intégralement automatique selon l'une des revendications précédentes, **caractérisée par** un logement concentrique de l'arbre (10 ; 18 ; 19) d'une part et de l'unité d'entraînement (20) d'autre part.

7. Machine à café intégralement automatique selon l'une des revendications précédentes, **caractérisée par** un arbre (10 ; 18 ; 19) au moins fabriqué en partie en plastique.

8. Machine à café intégralement automatique selon l'une des revendications précédentes, **caractérisée par** un arbre avec un filetage à filets multiples.
